(19) Europäisches Patentamt
European Patent Office
Office européen des brevets

(11) EP 4 764 686 A1

(12) EUROPEAN PATENT APPLICATION

(43) Date of publication:
**24.06.2026 Bulletin 2026/26**

(21) Application number: **24307162.8**

(22) Date of filing: **18.12.2024**

(51) International Patent Classification (IPC):
***G02F 1/1503*** *(2019.01)* ***G02F 1/1514*** *(2019.01)*

(52) Cooperative Patent Classification (CPC):
**G02F 1/1503; G02F 1/1514;** G02F 1/15165

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Essilor International**
**94220 Charenton-Le-Pont (FR)**

(72) Inventors:
- **ARCHAMBEAU, Samuel**
  **31290 MONTGAILLARD-LAURAGAIS (FR)**
- **MECA, Marion**
  **31120 LACROIX-FALGARDE (FR)**

(74) Representative: **Plasseraud IP**
**104 Rue de Richelieu**
**CS92104**
**75080 Paris Cedex 02 (FR)**

# (54) MULTICOLOR ELECTRONIC DEVICE WITH ONE ELECTROCHROMIC CELL

(57) The present invention provides an electrochromic device that can be set in states S0, S1 and S2, wherein different sets of electrochromic moieties are activated, and wherein state S2 is a state where the cell has a reversed polarity compared to state S1, all within one electrochromic cell. A single cell is thus able to achieve at least three different colors.

EP 4 764 686 A1

## Description

The present disclosure belongs to the field of electrochromic (EC) devices. The device of the present disclosure may be an electrochromic optical lens and more particularly an electrochromic ophthalmic lens.

EC devices are devices able to change color upon applying electric energy. Such devices, such as EC lenses, are known. They typically comprise an EC cell providing them with their specific color changing property.

EC cells typically comprise a structure comprising a shell defining a chamber. At least a portion of said shell is transparent, for example the shell can comprise sheets of organic or mineral glass. Typical EC cells also comprise at least two electrodes in contact with the inside of the chamber and connected to a power supply. Moreover, the EC cell comprises at least one oxidizing compound and at least one reducing compound that will respectively be reduced and oxidized when electric energy is applied to the cell. At least one of these oxidizing and reducing compounds is an electrochromic compound.

The EC compound is a material having electrochromic properties i.e. that changes color between its reduced and its oxidized state. It can be a mixture of different EC compounds. When an EC compound is reduced or oxidized, there needs to be another redox active compound that can give or accept the electrons that the EC compound respectively accepts or gives. This other redox active compound can itself be an EC compound. With an EC cell, it is possible to control the redox state and hence the color of the EC compounds comprised in the cell by applying electric energy (e.g. by applying an electric tension between the electrodes). Combining several EC compounds in an EC cell can be useful to adjust the color of the device when no electric energy is applied (passive state) and when electric energy is applied (active state).

The electrodes of an EC cell are typically flat transparent electrodes, made of transparent conductive oxides (TCO). TCOs are transparent inorganic metal oxides with good electrical conductivities, such as indium tin oxide (ITO). Typically, both electrodes have substantially the same shape and dimensions, and the electrodes are placed opposite to each other and are substantially parallel to each other. The chamber is then the space between the electrodes and the electrodes form the main part of the shell (a side wall connecting the edges of the electrodes and ensuring the tightness of the chamber typically forms the rest of the shell).

In a lens comprising such a typical EC cell, the substantially flat electrodes may be parallel to the main faces of the lens, with one electrode on the side of one of the main faces of the lens and the second electrode on the side of the other main face of the lens.

EC devices are typically designed with one clear state and one dark state. Some EC devices are designed with several dark states in addition to the clear state. In these cases, the various dark states are obtained by increasing the tension between the electrodes between each state. This results in either more of the same EC compound being excited or in a second EC compound being excited in addition to a first EC compound (see e.g. document US20050259310A1).

Thus, in such EC devices, the various dark states are such that they are progressively darker. The color change from a first dark state to a second dark state in these EC devices always results from adding the absorbance of a compound to the absorbance that was already present in a first colored state, which limits the colors available for the EC device and the combinations of color and transmittance available for the EC device. Also, the energy consumption for the second dark state is necessarily higher than the energy consumption for the first dark state.

It is thus desirable to provide a device, wherein a single EC cell can provide at least three colors to the device (including the color of the clear state, which is typically perceived by the human eye as an absence of color) without the above-mentioned limits to the colors and transmittances available and without the need to consume more energy in one of the dark state than the other.

Document US20180373107A1 allegedly describes a device wherein an EC cell can take three different states: three different states: a clear state, a first dark state corresponding to the activation of one EC compound and a second dark state corresponding to the activation of another EC compound. However, the embodiment allegedly providing these three different states described in US20180373107A1 clearly cannot work as the configuration described results in the activation of the two EC compounds simultaneously in one dark state and no activation of EC compounds in the other dark state (which thus should be of the same color as the clear state).

It is thus the merit of the present disclosure to provide a solution to the problem of providing a device, wherein a single EC cell can provide at least three colors to the device without the above-mentioned limitations on the color, transmittance and energy consumption.

The present disclosure provides the following items and embodiments:

1. Item 1: Device comprising an electrochromic cell, said electrochromic cell comprising:

   - a first electrode and a second electrode,
   - a chamber comprising a first compartment Z1 and a second compartment Z2 wherein Z1 is in contact with the first electrode and not with the second electrode and wherein Z2 is in contact with the second electrode and not with the first electrode,
   - means to apply a tension between the first electrode and the second electrode, said means being configured to be able to maintain the electrochromic cell in at least three states S0, S1 and S2,

wherein:

- in S0, the chamber comprises electroactive species A, B, C, and D, comprising moieties A, B, C and D respectively, no electrical energy is applied on the electrochromic cell, and no spontaneous redox reactions between electroactive moieties present in the chamber can occur,
- to reach S1 from S0, at least a portion of moiety A is reduced in a moiety A* at the first electrode, which acts as a cathode, and at least a portion of moiety B is oxidized in a moiety B* at the second electrode, which acts as an anode,
- to reach S2 from S0, at least a portion of moiety C is oxidized in a moiety C* at the first electrode, which acts as an anode, and at least a portion of moiety D is reduced in a moiety D* at the second electrode, which acts as a cathode, and
- at least one of the following four configurations is fulfilled:

  i. moiety A and moiety C are two different electrochromic moieties, and species A is confined in $Z_1$,
  ii. moiety A and moiety C are two different electrochromic moieties, and species C is confined in $Z_1$,
  iii. moiety A and moiety D are two different electrochromic moieties and species A is confined in $Z_1$,
  iv. moiety C and moiety B are two different electrochromic moieties and species C is confined in $Z_1$.

Such an electrochromic device activates different sets of electrochromic moieties in state S1, in state S2 (which is a state where the cell has a reversed polarity compared to state S1), and in state S0, within one electrochromic cell. A single cell is thus able to achieve at least three different colors. Indeed,

- in configuration (i), A is reduced to A* in S1 but not in S2 (A is confined at an anode in S2) and C is oxidized to C* in S2,
- in configuration (ii), C is oxidized to C* in S2 but not in S1 (C is confined at a cathode in S2) and A is reduced to A* in S2,
- in configuration (iii), A is reduced to A* in S1 but not in S2 and D is reduced to D* in S2,
- in configuration (iv), C is oxidized to C* in S2 but not in S1 and B is oxidized to B* in S2.

Since in all of configurations (i) to (iv), both electrochromic moieties are different, the cell has a different color in state S0, in state S1 and in state S2. Furthermore, the cell does not necessarily have a darker state or a higher energy consumption in one of states S1 and S2 compared to the other because states S1 and S2 only need to correspond to a change in the polarity of the tension applied and not necessarily in a different tension.

S0 may be maintained in short circuit or in open circuit. It may be reached from a state where tension is applied on the cell (such as S1 or S2) either by simply putting the cell in short circuit (to allow spontaneous reactions to occur) or by applying a tension with a polarity opposite to that applied in the original state for a given amount of time (to accelerate some of those spontaneous reactions). S0 is often a state where the device is the clearest so that, when a tension has to be applied to reach S0, it is easy to know when S0 is reached from any excited state as S0 corresponds to a minimum in absorbance of the device.

Spontaneous reactions are the reactions that are thermodynamically favored reactions even in the absence of applied electric energy. A state S0 where no spontaneous reactions between the electroactive moieties present in the chamber can occur may be obtained e.g. when all reducing moieties that exist in state S0 have a reduction potential higher or equal to that of any oxidizing moiety with which they can react (e.g. with which they can be in direct contact, in contact through a solvent, or in contact through the electrodes and the electric circuit linking the electrodes).

A moiety is defined herein as a covalently connected group of atoms having a defined structure, which is comprised in a species, in which it is covalently linked to other atoms comprised in said species. A species refers to a molecule or a material.

Unless otherwise mentioned or unless it is incompatible with the other requirements of item 1, any two moieties chosen from A, B, C and D can be the same moiety or the same moiety in another redox state. For example, in configuration (iii), it is possible that C and B are the same moiety in the same redox state and in configuration (i) or (ii), it is possible that B and D are the same moiety in a different redox state.

Moieties may be present as molecules (e.g. dissolved in a solvent), or as monomers copolymerized within a polymeric material. Copolymerization herein refers to any type of copolymerization (graft, block, random, alternating).

As defined herein, a moiety in a given system is electroactive if it can be reduced or oxidized reversibly in said system. The species comprising the moiety can then also be reduced or oxidized reversibly. The electroactive moiety is sufficiently individualized in the species for it to be possible to ascribe the reduction or oxidation of the species to the reduction or oxidation of the moiety.

An electrochromic moiety is an electroactive moiety that exhibits a strong change of color when its oxidation state is changed and that is strongly colored in

at least one of its reversibly attainable oxidation states. Here, when a moiety X is electrochromic, it means that X and X* do not have the same color. Here again, the species comprising the moiety also changes color and the electrochromic moiety is sufficiently individualized (e.g. not conjugated with the rest of the species) in the species for it to be possible to ascribe the color change of the species to the change or redox state of the moiety. Thus, there is a molecule comprising the moiety that will have an electrochromic behaviour close to that of the moiety. Said molecule in a given oxidation state is strongly colored i.e. there is a wavelength in the visible (from 380 nm to 800 nm) for which the molar absorption coefficient of the molecule is higher than 3000 $L \cdot mol^{-1} \cdot cm^{-1}$. Said molecule exhibits a strong color change when it reversibly changes oxidation states i.e. the maximum of the molar absorption coefficient of the more colored state is at least 3 times higher than the maximum of the molar absorption coefficient of the less colored state. According to this definition a simple ferrocene moiety will not be considered electrochromic even if its color changes when its oxidation state changes (ferrocenium has a maximum of the molar absorption coefficient of about 400 $L \cdot mol^{-1} \cdot cm^{-1}$). At typical concentrations of the ferrocene moiety and at typical thicknesses of the electrochromic cell, the color of the ferrocene moiety is not intense enough to be noticed.

Electroactive moieties, respectively electrochromic moieties, may be present as electroactive molecules, respectively electrochromic molecules, dissolved in a solvent, or as electroactive monomers, respectively electrochromic monomers, copolymerized within a polymeric material. Copolymerization herein refers to any type of copolymerization (graft, block, random, alternating).

As defined herein, the system is the ensemble of all the species that are in direct contact with each other, in contact through a solvent, or in contact through the electrodes and the electric circuit linking the electrodes. The system thus comprises all moieties that can react with each other in the states that can be reached by the system by applying electric energy to it (e.g. by applying a tension between the electrodes). The system also comprises a limit to the amount of electrical energy that can be applied to said compounds (either the means to apply a tension have a limited power or the device is designed to limit the tension applied, e.g. to avoid irreversible oxidation or reduction of something in the cell).

Z1 and Z2 simply define two zones inside the chamber, whether a tangible boundary materializes these zones or not. Accordingly, unless otherwise specified species are not confined in Z1 or Z2. It should be understood that the moieties that are able to react at the second electrode (comprising moieties B and D) are not confined in Z1.

When a species X is confined in a compartment of the cell or when a membrane is impermeable to a species X, it should be understood that said species X is confined in said compartment in all its redox states or that said membrane is impermeable to said species X in all its redox states.

2. Item 2: the device of item 1, wherein, in configurations (i) or (ii), moiety C is different from moiety A* and moiety A is different from moiety C*.
3. Item 3: the device of item 1 or 2, wherein, in configuration (i), moiety B is different from moiety A* and, in configuration (ii), moiety D is different from moiety C*.
4. Item 4: the device of any one of items 1 to 3, wherein, where the electroactive moieties present in S0 are the same moiety in a different redox state, said two moieties are not electrochromic moieties.

It is preferred that where the electroactive moieties present in S0 are the same moiety in a different redox state, said two moieties are not electrochromic moieties. In this way, it is ensured that the colors of state S1 and S2 can really be qualitatively different at the same energy consumption in one of states S1 and S2 compared to the other. For the same reason, in configurations (i) or (ii), it is preferred that C is different from A* and A is different from C*. It is also preferred that in configuration (i), B is different from A* and that in configuration (ii), D is different from C*.

5. Item 5: The device of any one of items 1 to 4, wherein a luminous transmittance of the device in S0, Tv0, is higher than a luminous transmittance of the device in S1, Tv1, and wherein Tv0 is higher than a luminous transmittance of the device in S2, Tv2; preferably Tv0 > Tv1 + 20% and Tv0 > Tv2 + 20%.

According to this item, S0 is a clear state compared to any one of S1 and S2.

Tv, the luminous transmittance, is as defined by ISO 13666:1998:

$$\mathrm{Tv} = 100 \times \frac{\int_{380\ \mathrm{nm}}^{780\ \mathrm{nm}} \tau(\lambda) \cdot V(\lambda) \cdot S_{D65}(\lambda) \cdot d\lambda}{\int_{380\ \mathrm{nm}}^{780\ \mathrm{nm}} V(\lambda) \cdot S_{D65}(\lambda) \cdot d\lambda} \%$$

where:

| | |
|---|---|
| $\lambda$ | is the wavelength in nanometers, |
| $\tau(\lambda)$ | is the spectral transmittance of the device at the wavelength $\lambda$, |
| $V(\lambda)$ | is the relative sensitivity of the human eye such as defined in ISO 11664-1, |
| $S_{D65}(\lambda)$ | is the spectral power distribution of CIE standard illuminant D65, such as defined in ISO 11664-2. |

6. Item 6: the device of any one of items 1 to 5, wherein,

in configuration i. species C is confined in Z1,
in configuration ii, species A is confined in Z1,
in configuration iii, species D is confined in Z2,
in configuration iv, species B is confined in Z2.

According to this item, there is an electrochromic moiety that is excited in S1 that is not excited in S2 and there in an electrochromic moiety that is excited in S2 that is not excited in S1.

7. Item 7: the device of item 6, wherein species A is confined in Z1 in all configurations.
8. Item 8: the device of item 6 or 7, wherein, where species A is confined in Z1, species A is a polymeric material A, within which moiety A is copolymerized.
9. Item 9: the device of item 8, wherein the polymeric material A is deposited as an insoluble layer on the first electrode.
10. Item 10: the device of any one of items 6 to 9, wherein species B is confined in Z2 in all configurations.
11. Item 11: the device of any one of items 6 to 10, wherein, where species B is confined in Z2, species B is a polymeric material B, within which moiety B is copolymerized.
12. Item 12: the device of item 11, wherein the polymeric material B is deposited as an insoluble layer on the second electrode.
13. Item 13: the device of any one of items 6 to 12, wherein species C is confined in Z1 in all configurations.
14. Item 14: the device of any one of items 6 to 13, wherein where species C is confined in Z1, species C is a polymeric material C, within which moiety C is copolymerized.
15. Item 15: the device of item 14, wherein the polymeric material C is deposited as an insoluble layer on the first electrode.
16. Item 16: the device of any one of items 6 to 15, wherein species D is confined in Z2 in all configurations.
17. Item 17: the device of any one of items 6 to 16, wherein, where species D is confined in Z2, species D is a polymeric material D, within which moiety D is copolymerized.
18. Item 18: the device of item 17, wherein the polymeric material D is deposited as an insoluble layer on the first electrode.

When a moiety is comprised in a polymeric material, it has the advantageous effect of making it easier to confine the moiety in a compartment of the inside of the chamber. Indeed, it becomes easier to find a semi-permeable membrane impermeable to the species containing said moiety due to the size of said species (polymeric species are large species by definition). In addition, in some cases, said polymeric material may be insoluble in the medium contained in the chamber of the cell, in this case, it is enough to deposit the polymeric material as a layer on an electrode to have it confined in the compartment containing said electrode. When the polymeric material is insoluble, it does not mean that it is impermeable to all the components of the medium contained in the chamber of the cell. In this case, the polymeric material can, for example, swell when a liquid component of the medium diffuses into it. This is preferred to facilitate electric charge movement between the moieties in such a polymer and therefore obtain a device whose color changes quickly and easily (i.e. without requiring applying too much energy) when switching states. Polymers that swell in the medium contained inside the chamber are also preferred because they provide improved optical properties because interfaces where the index of refraction of the medium changes abruptly are avoided. This is the case, in particular, when the polymeric material acts as the solid matrix of a gel, wherein a liquid component of the medium (e.g. a solvent comprised in the chamber) is able to diffuse. The polymeric materials of the present invention need not be conductive polymers and are preferably nonconductive polymers. The fact that they swell when a liquid component of the medium diffuses into it, implies that the polymer chains have some mobility in the chamber. Without wishing to be bound by theory, it is presumed that this facilitates oxidation or reduction of the electroactive moieties copolymerized in the polymeric material at one of the electrodes, because the polymeric chains are able to move such that the electroactive moieties copolymerized in the polymeric material get closer to an electrode.

19. Item 19: the device of any one of items 1 to 18, wherein the chamber comprises a solvent, preferably the solvent comprises propylene carbonate.
20. Item 20: the device of item 18, wherein the polymeric materials in the chamber (i.e., where applicable, the polymeric materials A, B, C and/or D) swell in the presence of the solvent.
21. Item 21: the device of any one of items 16 to 20, wherein species A and species C are confined in Z1 and wherein species B and species D are confined in Z2.

Such a configuration makes it possible that the cell keeps its color when going from state S1 or S2 to open circuit thus allowing to save energy as it is no longer necessary to apply energy to maintain a colored state.

22. Item 22: the device of any one of items 1 to 21, wherein species A and C are the same species AC, for example the same polymeric material AC.
23. Item 23: the device of any one of items 1 to 22, wherein species B and D are the same species BD, for example the same polymeric material BD.

The fact that two species X and Y are the same species does not imply that moieties X and Y, respectively

comprised in species X and species Y, are the same. It just means that one molecule or one material comprises both moiety X and moiety Y.

Having moieties A and C or moieties B and D in the same species, e.g. by covalently linking two electroactive molecules with a non-conjugated linker as in US6241916, increases the size of the species compared to the molecules taken separately and therefore makes it easier to confine the species by use of a membrane that would be impermeable to the species. It also makes the system simpler as there is only one species that needs to be handled: solubility constraints are lowered (if the species needs to be solubilized, at least when building the cell) and it is easier to ensure that both moieties in the species have access to the electrode (there is not one species that takes the place of the other, which can be an issue if the species is a polymeric material that has to be deposited on an electrode).

24. Item 24: the device of any one of items 8 to 23, wherein the electroactive moieties present in the polymeric materials in the chamber (i.e., where applicable, the polymeric materials A, B, C and/or D) are not conjugated together.

25. Item 25: the device of any one of items 1 to 24, wherein the chamber comprises a semi permeable membrane, said semi permeable membrane separating Z1 from Z2.

A semi-permeable membrane is a membrane that allows certain molecules or ions to pass through it and not others. In the present device, it is used to confine certain species, which would otherwise migrate, in Z1 or Z2.

26. Item 26: the device of item 25, wherein the semi permeable membrane is an ion selective membrane.

An example of a semi-permeable membrane is an ion selective membrane. Use of such membranes in electrochromic cells has been described in US20210103194A1. They are charged membranes that will prevent species of the same charge sign (i.e. positive or negative) to pass through it, thanks to electrostatic repulsion between charges of the same sign. However, it is difficult to find ion selective membranes having optical properties that are acceptable if the device is an ophthalmic lens.

27. Item 27: the device of item 25, wherein the semi permeable membrane is uncharged.

The use of uncharged membranes in electrochemical cells has been described in US20180373107A1. However, the membranes described in US20180373107A1 are not semi-permeable towards typical electrochromic species as they let these species pass through it. They merely slow down the diffusion of species from one electrode to the other. The present invention provides solutions for making it easier to obtain uncharged semi-permeable membranes by increasing the size of the species (see above).

28. Item 28: the device of item 27, wherein the semi permeable membrane comprises polyethylene glycol polyvinyl alcohol graft copolymer.

Semi permeable membranes with an optical quality compatible with the requirements ophthalmic lenses comprising polyethylene glycol polyvinyl alcohol graft copolymer are easy to make by simply spin coating and drying a water solution of said copolymer where it is desired to place the membrane.

29. Item 29: the device of any one of items 25 to 28, wherein the semi permeable membrane is impermeable to species A.

30. Item 30: the device of any one of items 25 to 29, wherein the semi permeable membrane is impermeable to species B.

31. Item 31: the device of any one of items 25 to 30, wherein the semi permeable membrane is impermeable to species C.

32. Item 32: the device of any one of items 25 to 31, wherein the semi permeable membrane is impermeable to species D.

33. Item 33: the device of any one of items 1 to 32, wherein moiety A is an electrochromic moiety comprising at least two conjugated heteroaromatic cycles, which are not fused together, wherein each one of said heteroaromatic cycles comprises a nitrogen atom carrying a + charge, for example moiety A is a viologen moiety.

When such a charged moiety A is combined with moiety C, and, for example, moiety C is uncharged, the species AC is always charged (i.e. even A*C is charged), which improves its solubility in polar solvents compared to a species that would only contain moiety C, making it easier to find a solvent that can solubilize both species A and species C.

34. Item 34: the device of any one of items 1 to 33, wherein moiety C is an electrochromic moiety and comprises a moiety having the following formula:

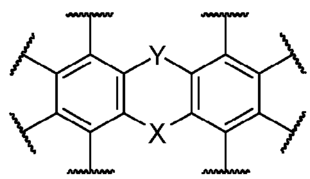

Wherein X and Y are independently selected from the list consisting of O, S, and

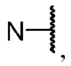

with the proviso that both X and Y cannot be O, preferably X is S and Y is

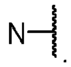

35. Item 35: the device of any one of items 1 to 34, wherein the device is in configuration i. or ii., and wherein neither B nor D are electrochromic.

36. Item 36: the device of item 35, wherein moieties B and D are comprised in the polymeric material BD, said moiety B being a ferrocene moiety and said moiety D being a ferrocenium moiety, preferably wherein D is the oxidized form of moiety B.

37. Item 37: the device of item 36, wherein polymeric material BD is a partially oxidized copolymer of vinylferrocene with acrylate monomers.

When partially oxidized, a copolymer of vinylferrocene with acrylate monomers will comprise ferrocenium and ferrocene moieties.

38. Item 38: the device of any one of items 1 to 37, wherein the device comprises a lens, for example an ophthalmic lens.

As herein defined, an ophthalmic lens is a lens which is designed to be mounted on a frame that can be worn by a wearer in such a way that it places the lens in front of the eye of the wearer. An ophthalmic lens can be used to protect the eye of the wearer or modify his vision (correction of the sight, protection from certain wavelengths, augmented reality, virtual reality, etc.). For example, ophthalmic lenses can be used in visors (such as helmet visors), monocles, or in eyeglasses (including sunglasses, goggles and safety glasses). As defined herein, contact lenses are not ophthalmic lenses. Ophthalmic lenses can be non-corrective ophthalmic lenses (also called plano or afocal lenses) or corrective ophthalmic lenses. A corrective lens may be a unifocal, a bifocal, a trifocal or a progressive lens. As defined herein, ophthalmic lenses can be finished lenses or semi-finished lenses. A semi-finished lens undergoes various treatment steps such as surfacing, coloring, coating and edging before being finally included in eyeglasses or in a monocle. A finished lens is ready to be included in the frame (eyeglasses, visors, a monocle, etc.)

39. Item 39: the device of item 38, wherein the device further comprises a frame, on which the ophthalmic lens is mounted, said frame being configured to be worn by a wearer in such a way that it places the lens in front of the eye of the wearer.

For manufacturing a device according to the present invention, any method known in the art may be used. For example, the methods disclosed in US20210103194A1 may be used for preparing a polymer comprising electrochromic moieties. For example, the methods disclosed in US20180373107A1 may be used for preparing semi permeable membranes.

In a preferred embodiment, the method for manufacturing the device of the invention is the method M according to the following items and embodiments:

40. Item 40: Method for manufacturing a device according to configurations i. or ii. of any one of items 1 to 39, comprising the following steps:

a. Providing an electrochromic cell, said electrochromic cell comprising:

- a first electrode and a second electrode,
- a chamber comprising a first compartment Z1 and a second compartment Z2 wherein Z1 is in contact with the first electrode and not with the second electrode and wherein Z2 is in contact with the second electrode and not with the first electrode,

wherein the chamber comprises electroactive species in one of the following configurations i.1 to i.4 and ii. 1 to ii.4:

in configuration i.1: Z1 comprises a species A, which is confined in Z1, a species C, and a species E* and Z2 comprises a species D,

in configuration i.2: Z1 comprises a species A*, which is confined in Z1, a species C and Z2 comprises a species D,

in configuration i.3: Z1 comprises a species A, which is confined in Z1, a species C, and a species F* and Z2 comprises a species B,

in configuration i.4: Z1 comprises a species A, which is confined in Z1, a species C* and Z2 comprises a species B,

in configuration ii.1: Z1 comprises a species A, a species C, which is confined in Z1, and a species E* and Z2 comprises a species D,

in configuration ii.2: Z1 comprises a species A*, a species C, which is confined in Z1, and Z2 comprises a species D,

in configuration ii.3: Z1 comprises a species A, a species C, which is confined in Z1, and a species F* and Z2 comprises a species B,

in configuration ii.4: Z1 comprises a species

A, a species C*, which is confined in Z1, and Z2 comprises a species B,

wherein

- species A, A*, B, C, C*, D, E* and F* comprise electroactive moieties A, A*, B, C, C*, D, E* and F* respectively,
- moiety E* can react spontaneously with moiety D in a reaction where moiety E* is oxidized into moiety E and wherein moiety D is reduced into moiety B,
- moiety F* can react spontaneously with moiety B in a reaction where moiety F* is reduced into moiety F and wherein moiety B is oxidized into moiety D,
- no spontaneous redox reactions can occur between moieties A, B, C and D or between A, C, and E* or between A, C and F*,
- it is possible to apply a tension U1 between the electrodes that will reduce moiety A into moiety A* at the first electrode and oxidize moiety B into moiety D at the second electrode,
- it is possible to apply a tension U2 between the electrodes that will reduce moiety D into moiety B at the second electrode and oxidize moiety C into moiety C* at the first electrode,
- There is an excess of moieties D over moieties E* or A*,
- There is an excess of moieties B over moieties F* or C*,
- moiety A and moiety C are two different electrochromic moieties;

b. allowing the spontaneous reactions between E* and D, A* and D, F* and B or C* and B to happen to obtain the device according to configurations i. or ii. of item, wherein moieties B and D are the same moiety in a different redox state.

Following method M, the species comprised initially in compartment Z2 is simpler compared to the species comprised in Z2 in the final device. Indeed, it may comprise only one electroactive species in only one redox form and compatibility issues between the various electroactive species present initially in Z2 may thus be avoided. Thus, a simplified method of manufacturing the device according to the present invention is provided.

In step a. of method M, the species are either in Z1 or Z2. However, from this state, they may diffuse in the other compartment of the cell, unless they are specified to be confined in one of the compartments.

In step b. of method M, allowing the spontaneous reaction between E* and D, A* and D, F* and B or C* and B to happen may comprise letting a non-confined species diffuse to the compartment where the other species is located or may include electrically connecting the electrodes (as in e.g. a galvanic cell). It is possible also to accelerate the spontaneous reaction by applying a tension between the electrodes. In this case, care should be taken not to go to the point where other reactions may happen.

In configurations i.1, i.3, ii.1 and ii. 3, moieties E* and F* may or may not be electrochromic moieties. Adding E* and F* to the starting mixture instead of using A* or C* as in configurations i.2, i.4, ii.2 and ii.4 increases the range of available species and makes it easier to find a compatible mixture of ingredients for preparing the cell.

41. Item 41: The method of item 40, wherein providing the electrochromic cell comprises the following substeps:

    a.0 selecting a configuration from configurations i.1 to i.4 and ii.1 to ii.4,

    a.1 providing the first and second electrodes,

    a.2 depositing a film 2 comprising the species comprised in Z2 in the selected configurations, on the second electrode,

    a.3 depositing a film 1 comprising the species comprised in Z1 in the selected configuration on the first electrode, and

    a.4 assembling electrochromic cell from the electrodes and the films deposited thereon.

42. Item 42: The method of item 41, wherein substep a.2 comprises depositing a film comprising a monomer mixture comprising a monomer comprising the moiety comprised in Z2 in the selected configuration and polymerizing the thus deposited monomer mixture to obtain the film 2.
43. Item 43: The method of item 42, wherein the film comprising the monomer mixture further comprises a photoinitiator and wherein polymerizing the film comprising the monomer mixture comprises exposing the film comprising the monomer mixture to UV light.
44. Item 44: the method of any one of items 40 to 43, wherein the configuration is selected from the list comprising i.3, i.4, ii.3, and ii.4, and wherein the moiety B is a ferrocene moiety.
45. Item 45: the method of item 44, wherein the monomer comprising the moiety B is vinylferrocene and wherein the monomer mixture further comprises acrylate monomers.
46. Item 46: the method of any one of items 41 to 45, wherein providing the electrochromic cell further comprises a substep a.2bis of depositing a semipermeable membrane on the film 2, opposite to the

second electrode, said semi permeable membrane being impermeable to the species specified to be confined in its compartment in the selected configuration.

47. Item 47: the method of item 46, wherein substep a.2bis comprises applying a film of a solution of polyethylene glycol polyvinyl alcohol graft copolymer in a solvent and drying said film to obtain the semi permeable membrane, preferably the solvent is water.

48. Item 48: the method of item 46 or 47, wherein the semipermeable membrane is impermeable to the species

A, the species A*, the species C, and the species C*, where said species are present.

49. Item 49: the method of any one of items 41 to 48, wherein the film 1 is a liquid film comprising a solution 1 of the species comprised in Z1 dissolved in a solvent, preferably said solvent comprises propylene carbonate.

In this case, either a semipermeable membrane is included, which prevents the species confined in Z1 from passing in Z2 or the film 2 is itself impermeable to the species confined in Z1.

Substep a.3 may then be performed by a one drop fill method, which comprises depositing a predetermined volume of the solution 1 on top of the film 2, or, where applicable, on top of the semi permeable membrane, and applying the first electrode on top of said predetermined volume.

The cell may be sealed by any method known in the art. A seal may be in place before applying the first electrode on the volume of solution 1 or a seal may be put in place afterwards. Or a precursor to the seal is preapplied and then cured to obtain the seal after the electrodes are set in place.

Alternatively, the first electrode may already be in place, facing the first electrode, both electrodes being separated by a precursor to a seal, comprising an opening. Solution 1 is injected in the volume defined by the space between the first electrode and the top of the film 2 or, where applicable, the top of the semi permeable membrane, by the opening in the precursor to the seal and the seal is then made final.

50. Item 50: the method of item 49, wherein the configuration is ii.4 and solution 1 comprises a species comprising at least two conjugated heteroaromatic cycles, which are not fused together, wherein each one of said heteroaromatic cycles comprises a nitrogen atom carrying a + charge, such as a viologen, as species A, a phenothiazine as species C, and a phenoxazinium as species F*.

**Example**

An electrochromic lens comprising an electrochromic cell was prepared. The space between the electrodes of the electrochromic cell comprised three layers prepared as follows:

- Layer 1: layer 1 was coated directly on a first ITO electrode by spin coating followed by UV irradiation under a nitrogen atmosphere. The composition used for the spin coating comprised (percentages being by weight relative to the total mass of the composition) 10% vinyl ferrocene, 63% of a mixture of acrylate monomers, 3% Irgacure 819 (a photoinitiator), 10% propylene carbonate (a solvent), 20% Dowanol (a co-solvent) and 0.2% BYK3752 (a surfactant).
- Layer 2: layer 2 was a semipermeable membrane, it was spin-coated on top of layer 1 after layer 1 was polymerized. The composition used for the spin coating was a solution of Kollicoat Protect (a polyethylene glycol polyvinyl alcohol graft copolymer) in water at 5% w/w relative to the total mass of the composition. The spin-coated film was then heated at 60°C for 30 min.
- Layer 3: Layer 3 was deposited by the one drop fill method, a second ITO electrode being used to seal the cell. The composition used comprised 25 mM of viologen (an oxidizing EC compound), 25 mM of methylphenothiazine (a reducing EC compound) and 10 mM of phenoxazinium (an reducing EC compound in its oxidized state), and 20% w/w relative to the total mass of the composition of polyvinyl acetate (Vinnapas C501) in propylene carbonate.

The EC cell is connected to a direct current power supply.

The EC cell obtained was activated by putting it in short circuit to allow the phenoxazinium react with the ferrocene to obtain phenoxazine and ferrocenium.

When the polarity of the direct current power supply is such that the first ITO electrode is the anode and the second is the cathode, the cell takes a green color (corresponding to the reduction of the viologen compound) when the tension is 0.7 V.

When the polarity of the direct current power supply is such that the first ITO electrode is the cathode and the second is the anode, the cell takes a pink color (corresponding to the oxidation of methylphenothiazine and of phenoxazine) when the tension is 0.5 V.

**Claims**

**1.** Device comprising an electrochromic cell, said electrochromic cell comprising:

- a first electrode and a second electrode,
- a chamber comprising a first compartment Z1

and a second compartment Z2 wherein Z1 is in contact with the first electrode and not with the second electrode and wherein Z2 is in contact with the second electrode and not with the first electrode,

- means to apply a tension between the first electrode and the second electrode, said means being configured to be able to maintain the electrochromic cell in at least three states S0, S1 and S2,

wherein:

- in S0, the chamber comprises electroactive species A, B, C, and D, said electroactive species A, B, C, and D comprising moieties A, B, C and D respectively, no electrical energy is applied on the electrochromic cell, and no spontaneous redox reactions between electroactive moieties present in the chamber can occur,
- to reach S1 from S0, at least a portion of moiety A is reduced in a moiety A* at the first electrode, which acts as a cathode, and at least a portion of moiety B is oxidized in a moiety B* at the second electrode, which acts as an anode,
- to reach S2 from S0, at least a portion of moiety C is oxidized in a moiety C* at the first electrode, which acts as an anode, and at least a portion of moiety D is reduced in a moiety D* at the second electrode, which acts as a cathode, and
- at least one of the following four configurations is fulfilled:

i. moiety A and moiety C are two different electrochromic moieties, and species A is confined in $Z_1$,
ii. moiety A and moiety C are two different electrochromic moieties, and species C is confined in $Z_1$,
iii. moiety A and moiety D are two different electrochromic moieties and species A is confined in $Z_1$,
iv. moiety C and moiety B are two different electrochromic moieties and species C is confined in $Z_1$.

**2.** The device of claim 1, wherein species A and species C are confined in Z1 and wherein species B and species D are confined in Z2.

**3.** The device of claim 1 or 2, wherein species A and C are the same species, for example the same polymeric material.

**4.** The device of any one of claims 1 to 3, wherein species B and D are the same species, for example the same polymeric material BD.

**5.** The device of any one of claims 1 to 4, wherein the chamber comprises a semi permeable membrane, said semi permeable membrane separating Z1 from Z2.

**6.** The device of claim 5, wherein the semi permeable membrane is uncharged and wherein the semi permeable membrane comprises polyethylene glycol polyvinyl alcohol graft copolymer.

**7.** The device of any one of claims 1 to 6, wherein moiety A is an electrochromic moiety comprising at least two conjugated heteroaromatic cycles, which are not fused together, wherein each of said heteroaromatic cycles comprises a nitrogen atom carrying a + charge, for example moiety A is a viologen moiety.

**8.** The device of any one of claims 1 to 7, wherein moiety C is an electrochromic moiety and comprises a moiety having the following formula:

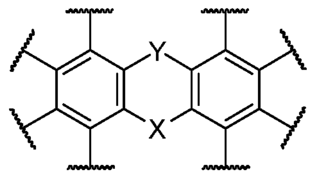

wherein X and Y are independently selected from the list consisting of O, S, and

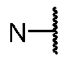,

with the proviso that both X and Y cannot be O, preferably X is S and Y is

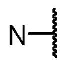.

**9.** The device of any one of claims 1 to 8, wherein the device is in configuration i. or ii., and wherein neither B nor D are electrochromic and wherein moieties B and D are comprised in the polymeric material BD, said moiety B being a ferrocene moiety and said moiety D being a ferrocenium moiety, preferably wherein D is the oxidized form of moiety B.

**10.** The device of any one of claims 1 to 9, wherein the device comprises a lens, for example an ophthalmic lens.

**11.** Method for manufacturing the device according to configurations i. or ii. of any one of claims 1 to 10, comprising the following steps:

a. Providing an electrochromic cell, said electrochromic cell comprising:

- a first electrode and a second electrode,
- a chamber comprising a first compartment Z1 and a second compartment Z2 wherein Z1 is in contact with the first electrode and not with the second electrode and wherein Z2 is in contact with the second electrode and not with the first electrode,

wherein the chamber comprises electroactive species in one of the following configurations i.1 to i.4 and ii. 1 to ii.4:

in configuration i.1: Z1 comprises a species A, which is confined in Z1, a species C, and a species E* and Z2 comprises a species D,
in configuration i.2: Z1 comprises a species A*, which is confined in Z1, a species C and Z2 comprises a species D,
in configuration i.3: Z1 comprises a species A, which is confined in Z1, a species C, and a species F* and Z2 comprises a species B,
in configuration i.4: Z1 comprises a species A, which is confined in Z1, a species C* and Z2 comprises a species B,
in configuration ii.1: Z1 comprises a species A, a species C, which is confined in Z1, and a species E* and Z2 comprises a species D,
in configuration ii.2: Z1 comprises a species A*, a species C, which is confined in Z1, and Z2 comprises a species D,
in configuration ii.3: Z1 comprises a species A, a species C, which is confined in Z1, and a species F* and Z2 comprises a species B,
in configuration ii.4: Z1 comprises a species A, a species C*, which is confined in Z1, and Z2 comprises a species B,

wherein

- species A, A*, B, C, C*, D, E* and F* comprise electroactive moieties A, A*, B, C, C*, D, E* and F* respectively,
- moiety E* can react spontaneously with moiety D in a reaction where moiety E* is oxidized into moiety E and wherein moiety D is reduced into moiety B,
- moiety F* can react spontaneously with moiety B in a reaction where moiety F* is reduced into moiety F and wherein moiety B is oxidized into moiety D,
- no spontaneous redox reactions can occur between moieties A, B, C and D or between A, C, and E* or between A, C and F*,
- it is possible to apply a tension U1 between the electrodes that will reduce moiety A into moiety A* at the first electrode and oxidize moiety B into moiety D at the second electrode,
- it is possible to apply a tension U2 between the electrodes that will reduce moiety D into moiety B at the second electrode and oxidize moiety C into moiety C* at the first electrode,
- There is an excess of moieties D over moieties E* or A*,
- There is an excess of moieties B over moieties F* or C*,
- moiety A and moiety C are two different electrochromic moieties;

b. allowing the spontaneous reactions between E* and D, A* and D, F* and B or C* and B to happen to obtain the device according to configurations i. or ii. of item, wherein moieties B and D are the same moiety in a different redox state.

**12.** The method of claim 11, wherein providing the electrochromic cell comprises the following substeps:

a.0 selecting a configuration from configurations i.1 to i.4 and ii.1 to ii.4,
a.1 providing the first and second electrodes,
a.2 depositing a film 2 comprising the species comprised in Z2 in the selected configurations, on the second electrode,
a.3 depositing a film 1 comprising the species comprised in Z1 in the selected configuration on the first electrode, and
a.4 assembling electrochromic cell from the electrodes and the films deposited thereon.

**13.** The method of claim 12, wherein substep a.2 comprises depositing a film comprising a monomer mixture comprising a monomer comprising the moiety comprised in Z2 in the selected configuration and polymerizing the thus deposited monomer mixture to obtain the film 2.

**14.** The method of any one of claims 11 to 13, wherein the configuration is selected from the list comprising i.3, i.4, ii.3, and ii.4, and wherein the moiety B is a ferrocene moiety.

**15.** The method of claim 14, wherein the monomer comprising the moiety B is vinylferrocene and wherein the monomer mixture further comprises acrylate monomers.

Europäisches Patentamt
European Patent Office
Office européen des brevets

# EUROPEAN SEARCH REPORT

Application Number
EP 24 30 7162

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2018/373107 A1 (BALLET JEROME [FR] ET AL) 27 December 2018 (2018-12-27)<br>* figures 1,2 *<br>* paragraph [0035] - paragraph [0095] *<br>----- | 1-15 | INV.<br>G02F1/1503<br>G02F1/1514 |

TECHNICAL FIELDS SEARCHED (IPC)

G02F

The present search report has been drawn up for all claims

| Place of search | Date of completion of the search | Examiner |
|---|---|---|
| Munich | 22 May 2025 | Kentischer, Florian |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 24 30 7162

This annex lists the patent family members relating to the patent documents cited in the above-mentioned European search report. The members are as contained in the European Patent Office EDP file on
The European Patent Office is in no way liable for these particulars which are merely given for the purpose of information.

22-05-2025

| Patent document cited in search report | Publication date | Patent family member(s) | Publication date |
|---|---|---|---|
| US 2018373107 A1 | 27-12-2018 | CN 109116654 A | 01-01-2019 |
| | | EP 3418799 A1 | 26-12-2018 |
| | | US 2018373107 A1 | 27-12-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20050259310 A1
- US 20180373107 A1
- US 6241916 B
- US 20210103194 A1